# EUROPEAN PATENT APPLICATION

(11) **EP 2 602 024 A1**
(43) Date of publication of application: **12.06.2013**
(21) Application number: 11306628.6
(22) Date of filing: 08.12.2011
(51) Int. Cl.: B01J 35/04, B01J 35/10

(54) **Catalytic architecture with high S/V ratio, low DP and high void fraction for industrial applications**

(71) Applicant: L'Air Liquide Société Anonyme pour l'Etude et l'Exploitation des Procédés Georges Claude, 75007 Paris (FR)
(72) Inventor: Del-Gallo, Pascal, 91410 Dourdan (FR); Gary, Daniel, 78180 Montigny le Bretonneux (FR); Cornillac, Mathieu, 97434 Saint-Gilles-les-bains (RE); Haegele, Christian, 60388 Frankfurt/Main (DE)
(74) Representative: Beroud, Amandine

(57) **Abstract**

Catalytic substrate characterized in that it possesses an architecture, which develops a Geometric Surface Area (GSA) greater than 5,000m²/m³ and a Percent of Void Fraction (PVF) greater than 80%; Catalytic composition comprising it; its preparation process and its use as a catalyst in synthesis gas processes.

## Description

The invention concerns the catalysts and their use in various chemical processes.

Gas phase catalysts essentially consist in a substrate (or support) made of ceramic inorganic materials or metallic alloys, whereon a catalytic active phase is deposited. Known deposition technics are for example, the impregnation, the dip coating, the washcoating or the vapour deposition.

The active phase generally comprises a metal or a mixture of metals, either noble metals or transition metals, such as platinum (Pt), rhodium (Rh), Palladium (Pd), Iridium (Ir), nickel (Ni), copper (Cu), Cobalt (Co) or Molybdenum, in an amount reaching from about 0.01wt% to 20 wt% of the catalyst.

If the catalyst contains a very high content of active phase, more than 50wt%, it is generally obtained by precipitation or co-precipitation of a mixture of precursors. In that case a support is not used, some blocking agents are added such as La₂O₃, ZrO₂, Al₂O₃, SiO₂ MgO or CaO, or their mixtures, to avoid the sintering of active particles. A thermal pre-treatment such as calcination or sintering and sometimes a chemical pre-treatment such a reduction may be worked on, to reinforce the thermal and chemical stability of these materials. These materials are generally produced in several types of morphology, such as powders, beads, tablets or pellets.

However these catalysts produced on such shaping and geometries generate many drawbacks, like a bad diffusion of the reactants, pressures drops in gas phase catalysis and a low availability of the active phases for the reactants involved in the catalytic reaction. One of the reasons is that many catalytic reactions are considered as surface and/or pseudo-volume reactions. That means that the reaction mainly occurs on the outer part of the catalyst (depth is in the range of 100 µm). Therefore, the material, which is for example located in the bulk of the pellet, is not concerned by the reaction, and, depending on other parameters such as the reaction kinetic, gas diffusions or pore's diameters, a large amount of the active phase is not used for the reaction.

International application WO 2010/125369 discloses an eggshell type catalyst preparation, where the active phase is concentrated in a thin layer around the outside of the catalyst pellet, so that more active phase is involved in the reaction which potentially generates a higher reaction yield.

International application WO 2010/029324 discloses a way to minimize said pressure drops by through the developments of shaped heterogeneous catalysts of specific forms, such as cylinders with holes, having specific size ratios, such as the diameter of the holes versus the diameters of the cylinders.

International application WO 2004/014549 discloses catalyst particles (advanced catalyst shapes) having a Relative Particle Size Parameter, or RPSP, which is the diameter to height ratio, in the rage of 0.5/1 to 1/1, with a higher Geometric Surface Area, or GSA, and a lower Relative Pressure Drop, or RPD, than prior catalysts. These advanced catalyst shapes are randomly loaded in a tubular reactor and the RPD & GSA parameters are measured or evaluated and compared to those of previous materials. Improved catalytic performances are achieved by increasing GSA and lowering RPD. With these advanced shapes the GSA is increased (greater than 150 Ft²/Ft³) leading to an improved Surface Area Catalyst Activity (+ 20% up to +45% depending on the shape type) and to a lowered Percent Void Fraction (or PVF) under 60%.

International application WO 2008/008639 discloses the use of monolith substrates like honeycombs, or foams for the deposition of a catalyst phase by washcoat. The substrate is made of a refractory, substantially inert, rigid material such as ceramic-like porous material composed of one or more metal oxide(s): as alumina, or mixtures of alumina and silica, or alumina, silica and titania. The monolithic substrate may contain a plurality of flow passages, such as from about 50 to about 1,200 parallel gas channels per square inch of face area (cpsi) for a honeycomb shaped substrate; it may also have a lot of cells interconnected by struts, such as from about 10 up to about 100 pores per inch (ppi) for a foam shaped substrate.

Today there is still the need to improve the yield of heterogeneous catalytic reactions through the development of new architectures of catalytic substrates which leads:
- (i) To increase the reliability and efficiency of the process, mainly by improving the lifetime and the stability of catalytic beds;
- (ii) To control and decrease the energy consumption, mainly by lowering the pressure drop;
- (iii) To control the environment approach, by minimizing carbon dioxide and other pollutants emission and by decreasing the energy consumption of the process;
- (iv) To reduce the costs, thanks to more compacts reactors leading to the decrease of the decrease of catalytic volumes and metal weights,

The inventors found that these objectives can be reached thanks to a high GSA in order to disperse the active(s) phase(s) and increase the accessibility to the gas, while avoiding the diffusion limitation, thanks to a low RPD and to a high PVF.

These catalysts must also be thermally and chemically stable along the process and easy to produce. Finally they must be prone to promote catalytic surface reactions during the process

That is why, according to a first embodiment, the invention relates to a catalytic substrate, characterized in that it possesses an architecture which develops a Geometric Surface Area (GSA) greater than 5,000 m²/m³, more particularly greater or equal to 10,000m²/m³ and a Percent of Void Fraction (PVF) greater than 80%.

In the context of the invention, the GSA parameter is determined by using tomography measurements as described by T. Dillard and all (Centre des Matériaux P.M. Fourt, Ecole des Mines de Paris, France: in situ X-ray microtomography tensile tests in ductile open-cell nickel foams) and the PVF parameter is obtained by comparing the density of the PU foam to the density of the components in solution used during the manufacturing of the foam.

According to a particular embodiment, the invention concerns a catalytic substrate as hereinbefore defined, characterized in that said architecture is either a foamy-like structure or a honeycombs-like structure.

According to a more particular embodiment, the invention concerns a catalytic substrate as hereinbefore defined, characterized in that said foamy-like structure, offers a macroporosity greater or equal to 10ppi, more particularly greater ore equal to 20 ppi.

In the context of this particular embodiment of the invention, the macroporosity is determined by counting the number of pores on a length and / or on a section (Sumitomo proposal) or by measuring by means of a microscope the mean cell diameter (Recticel proposal).

According to another more particular embodiment, the invention concerns a catalytic substrate as hereinbefore defined, characterized in that said honeycombs-like structure, offers a macroporosity greater or equal to 200 cpsi.

In the context of this particular embodiment of the invention, the macroporosity is determined by the method disclosed by manufacturers (determination of a number of cells on a section).

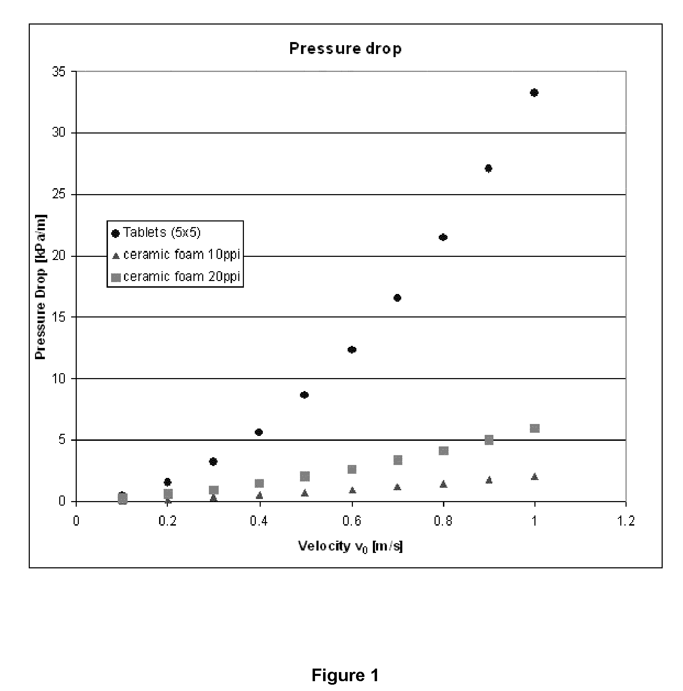

Foams having a PVF ≥ 85% generate very low level of DP. For industrial velocities (≥1m/s) it is possible to reduce DP by 90% comparatively to conventional shapes. **Figure 1** illustrate this point by showing a comparison of the pressure drop values generated by conventional shapes, such as 3mm diameter spheres or 3x3mm tablets or 5x5 mm tablets, of which the percent void fraction (PVF) is around 36%, against the pressure drop value generated by a catalytic substrates according to the invention with a foamy-like structure having a macroporosity of 10 ppi and 30 ppi.

The catalytic substrate according to the invention is generally made of ceramic and/or of metallic materials. Ceramic material is more particularly chosen either from chemically and thermally stables metallic oxides, such as Alumina (Al₂O₃) titania (TiO₂), zirconia (ZrO₂), ceria (CeO₂) silica (SiO₂), Magnesia (MgO), or a mixture of them, mullite (Al₆Si₂O₁₃), spinel (MgAl₂O₄) or cordierite (Mg,Fe)₂Al₄Si₅ O₁₈. or from chemically and thermally stables non-oxides such as carbides, for example zirconium carbide (ZrC), silicon carbide (SiC), vanadium carbide (VC), chromium carbide Cr₃C₂, or boron carbide B₁₂C₃, or nitrides for example, tinite (TiN) silicon nitride (Si₃N₄), boron nitride (-c-BN).

According to a more particular embodiment, the invention concerns a catalytic substrate as hereinbefore defined having a volume from 15 mm³ to 5 cm³.

Metallic material must be chosen depending on operating conditions (temperature, pressure, atmosphere composition) and must be selected with respect to the melting point and the thermochemical resistance to atmosphere. Typically the best materials are alloys such as Iron-chromium alloys (FeCrAlloy) or nickel- chromium alloys (NiCrAlloy), said alloys being optionally doped by element in traces, such as Aluminium or Yttrium.

According to a more particular embodiment, the invention concerns a catalytic substrate as hereinbefore defined having a volume from 15 mm³ to 1 dm³.

They would also be protected if necessary by an anti-corrosion layer through an aluminisation step with or without a pre-oxidative treatment.

The catalytic substrate according to the invention, through a significant increase of S/V ratios, thanks to a high GSA offers a lot of more available of active sites to the reactants than catalyst according to the prior art. This is also a way to increase the apparent efficiency of the active(s) phase(s), the same conversion being achieved with a lower quantity of active(s) phase(s) due to better gas mixture accessibility. Due to the process of elaboration and nature of the material (metal), it is possible to obtain a substrate with a high density of pores (50ppi or more) totally open leading to the highest S/V ratios greater than 10000m²/m³, associated to weak DP and a PVF ≥ 80%. In comparison a conventional catalyst using a 5x5mm tablets offers a S/V close to 1200m²/m³ associated to a high DP and a PVF ≤ 35%.

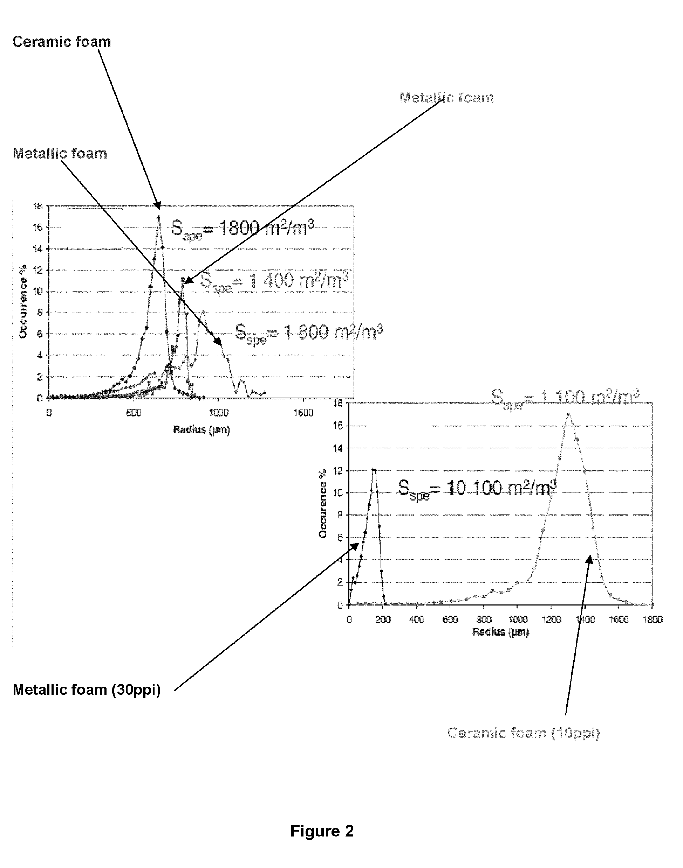

**Figure 2** illustrates such a comparison of the S/V ratios (m²/m³) of different foamy shapes (ceramic foams S/V= 1100 up to 1800 m²/m³ and metallic foam S/V = 10100m²/m³); the values being obtained by tomography measurements.

According to a more particular embodiment, the invention concerns a catalytic substrate as hereinbefore defined, characterized in that said foamy-like structure, offers a macroporosity greater or equal to 30ppi, more particularly greater or equal to 50 ppi.

According to a further embodiment, the invention concerns a catalytic composition comprising a catalytic substrate and an active phase, characterized in that said substrate is the catalytic substrate as herein before defined and that said active phase is coated on the external surface said catalytic substrate.

According to this embodiment, said active phase more particularly comprises one or more metallic elements chosen from noble metals and/or transition metals b) and preferably chosen from rhodium (Rh), platinum (Pt), palladium (Pd), and nickel (Ni).

According to another particular embodiment, the thickness of said coating of said active phase of the catalytic layer deposited on the substrate greater or equal to 2 µm and less or equal to 100 µm.

The catalytic substrate and composition as herein before defined can be proposed through different geometries and sizes, either pellets, monolithic cartridges, discs or stacks.

According to another embodiment, the invention relates to a preparation process of a catalytic composition as hereinabove defined, comprising the following steps:
- A step a), during which said catalytic substrate, is dipped into a washcoat aqueous composition comprising the hydro-soluble precursors of said metallic elements, and at least one binder for coating said metallic elements on said catalytic substrate, to form a coated monolithic structure;
- A step b), during which said coated monolithic structure is dried and then calcined to obtain said catalytic composition.

The catalytic composition as hereinabove defined may be used in many industrial processes to promote chemical reactions in several fields such as in the production of syngas, using different types of feedstocks, for example natural gas, naphtha, LPG, Steam, CO₂, and/or refinery gases, in the transformation of Syngas for the production of Substitute of Natural Gas, Methanol, or Fuel Chemicals in automotive application, for example to improve TWC converters).
According to another embodiment the invention concerns the use of the catalytic composition as herein before defined, as a catalyst in synthesis gas processes.

## Claims

1. Catalytic substrate **characterized in that** it possesses an architecture, which develops a geometric surface area (GSA) greater than 5,000m²/m³ and a percent of void fraction (PVF) greater than 80%.

2. Catalytic substrate as defined in Claim 1, **characterized in that** said architecture is either a foamy-like structure or a honeycombs-like structure.

3. Catalytic substrate as defined in Claim 2, **characterized in that** said foamy-like structure, offers a macroporosity greater or equal to 10ppi, more particularly greater ore equal to 20ppi.

4. Catalytic substrate as defined in Claim 2, **characterized in that** said honeycombs-like structure, offers a macroporosity greater or equal to 200cpsi.

5. Catalytic substrate as defined in one of Claims 1 to 4, **characterized in that** it is made of an inorganic oxide chosen among titania, zirconia, ceria, silica, magnesia, or a mixture of them, mullite, spinel or cordierite.

6. Catalytic substrate as defined in one of Claims 1 to 4, **characterized in that** it is made of an inorganic non-oxide chosen from zirconium carbide, silicon carbide, vanadium carbide, chromium carbide, boron carbide, tinite, silicon nitride or boron nitride.

7. Catalytic substrate as defined in one of Claims 5 or 6, having a volume from 15mm³ to 5cm³

8. Catalytic substrate as defined in one of Claims 1 to 4, **characterized in that** it is made of Iron-chromium alloys (FeCrAlloy) or of nickel-chromium alloys (NiCrAlloy).

9. Catalytic substrate as defined in Claim 8, having a volume from 15 mm³ to 1 dm³.

10. Catalytic substrate as defined in one Claims 1 to 3 and 5 to 9, **characterized in that** said foamy-like structure, offers a macroporosity greater or equal to 30 ppi, more particularly greater or equal to 50 ppi.

11. Catalytic composition comprising a catalytic substrate and an active phase, **characterized in that** said substrate is the catalytic substrate as defined in one of Claims 1 to 10 and that said active phase is coated on the external surface said catalytic substrate.

12. Catalytic composition as defined in Claim 11, **characterized in that** said active phase comprises one or more metallic elements chosen from noble metals and/or transition metals b) and preferably chosen from rhodium, platinum, palladium, and nickel.

13. Catalytic composition as defined in of Claims 11 or 12, **characterized in that** the thickness of said coating of said active phase of the catalytic layer deposited on the substrate greater or equal to 2 µm and less or equal to 100 µm

14. Preparation process of a catalytic composition as defined in one of Claim 11 to 13; comprising the following steps:
- A step a), during which said catalytic substrate is dipped into a washcoat aqueous composition comprising the hydrosoluble precursors of said metallic elements, and at least one binder for coating said metallic elements on said catalytic substrate, to form a coated monolithic structure;
- A step b), during which said coated monolithic structure is dried and then calcined to obtain said catalytic composition.

15. Use of the catalytic composition as defined in one of Claims 11 to 13, as a catalyst in synthesis gas processes.
